Europäisches Patentamt

European Patent Office

Office européen des brevets

(19)

(11) Numéro de publication : **0 278 858 B1**

## (12) FASCICULE DE BREVET EUROPEEN

(45) Date de publication du fascicule du brevet :
24.04.91 Bulletin 91/17

(51) Int. Cl.⁵ : **B02C 21/00, B02C 23/12**

(21) Numéro de dépôt : **88400252.8**

(22) Date de dépôt : **03.02.88**

---

(54) Procédé de broyage de matières minérales quelconques et installation pour la mise en oeuvre de ce procédé.

---

(30) Priorité : **10.02.87 FR 8701646**

(43) Date de publication de la demande :
**17.08.88 Bulletin 88/33**

(45) Mention de la délivrance du brevet :
**24.04.91 Bulletin 91/17**

(84) Etats contractants désignés :
**AT CH DE ES GB GR IT LI LU NL SE**

(56) Documents cités :
**EP-A- 0 084 383
DE-A- 1 757 093
DE-A- 3 518 543
GB-A- 961 519**

(73) Titulaire : **CLE
170, Place Henri Régnault
F-92090 Courbevoie (FR)**

(72) Inventeur : **Paliard, Maurice
2 rue des Chasseurs
F-42570 Saint Heand (FR)**

(74) Mandataire : **Durand, Yves Armand Louis et al
Cabinet Z. Weinstein 20, Avenue de Friedland
F-75008 Paris (FR)**

EP 0 278 858 B1

Jouve, 18, rue Saint-Denis, 75001 PARIS

## Description

La présente invention a essentiellement pour objet un procédé de broyage de matières minérales quelconques, telles que par exemple du clinker de ciment.

Elle vise également une installation pour la mise en oeuvre de ce procédé.

Il est connu depuis longtemps que le broyage de matières minérales quelconques peut s'effectuer en plusieurs étapes en vue de rendre l'opération de broyage possible ou d'améliorer son rendement.

C'est ainsi que les matières minérales peuvent être tout d'abord broyées par compression lente dans un broyeur à rouleaux, ce après quoi les matières pré-broyées alimentent un autre broyeur conduisant au produit final désiré.

Ce processus de broyage présente un certain nombre d'inconvénients au niveau de l'étape de pré-broyage des matières minérales.

En effet, en raison de l'effort d'écrasement à fournir, il se produit des usures au niveau des rouleaux du broyeur assurant le pré-broyage, et la durée de vie des roulements du broyeur est limitée.

En outre, le pourcentage de particules grossières obtenues après le pré-broyage demeure élevé, de sorte qu'il y a un risque de bourrage sans le broyeur final surtout si celui-ci est un broyeur à boulets, ce qui bien sûr diminue le rendement de ce broyeur.

Le document DE-A-3 518 543 décrit un procédé et une installation de broyage selon le préambule des revendications 1 et 4 et présentant les inconvénients ci-dessus.

Par ailleurs, on a proposé d'après le document DE-A-1 757 093, de broyer un matériau en utilisant plusieurs broyages successifs dans le but de satisfaire l'exigence de finesse du produit fini à la sortie du dernier broyeur à compression lente.

Mais il n'a jamais été proposé d'interposer des broyeurs intermédiaires entre un premier broyeur et un broyeur final de type différent dans le but d'améliorer le rendement global de l'installation, et en particulier le rendement du broyeur final.

La présente invention comble cette lacune en prévoyant des étapes de broyage intermédiaire conférant au broyeur final un rendement qui est meilleur et surprenant et qui compense largement la complication et le coût d'une installation utilisant de telles étapes de broyage intermédiaire.

A cet effet, l'invention a pour objet un procédé de broyage de matières minérales quelconques, telles que par exemple du clinker de ciment et du type consistant d'une part à broyer la matière en au moins deux étapes, à savoir une première étape de broyage par écrasement lent de la matière et une deuxième étape de broyage procédant d'une manière différente, d'autre part à séparer le produit issu de la deuxième étape de broyage en une fraction de produit fini qui est extraite et une fraction de produit grossier qui est recyclée, au moins en partie, à l'alimentation de l'étape de broyage final, caractérisé en ce que entre la première étape de broyage et la deuxième étape de broyage, on effectue au moins une étape de broyage intermédiaire par écrasement lent de la matière sans extraction intermédiaire de produit fini entre la première et la deuxième étapes de broyage.

Suivant une autre caractéristique de ce procédé, le nombre d'étapes de broyage intermédiaire par écrasement lent de la matière est compris entre 2 et 10.

On précisera encore ici que les étapes de broyage intermédiaire par écrasement lent peuvent résulter d'un recyclage de la matière.

L'invention vise encore une installation pour l'exécution de ce procédé et du type comprenant un premier broyeur permettant le broyage de la matière minérale par compression lente, ce broyeur étant raccordé à un broyeur final de type différent dont la sortie est raccordée à un séparateur de particules qui est relié notamment à l'entrée du broyeur final, caractérisé en ce qu'il comprend au moins deux broyeurs à compression lente et communicants, ou un broyeur à compression lente muni d'un système de recyclage de la matière depuis la sortie vers l'entrée de ce broyeur, ces deux broyeurs ou ce broyeur étant intercalés entre le premier broyeur et le broyeur final.

Cette installation est encore caractérisée en ce que, dans le cas où elle comprend au moins deux broyeurs communicants, au moins l'un des broyeurs est muni d'un système de recyclage vers l'entrée de ce broyeur ou vers l'entrée de l'un quelconque des broyeurs précédents.

Suivant un mode de réalisation particulier, le broyeur final est un broyeur à sortie centrale alimenté à chaque extrémité par un broyeur à compression lente équipé d'un système de recyclage de la matière et dont la sortie est reliée à deux séparateurs de particules indépendants, chaque séparateur étant relié à l'un des broyeurs à compression lente, et à l'une et/ou l'autre des extrémités ou entrées du broyeur final.

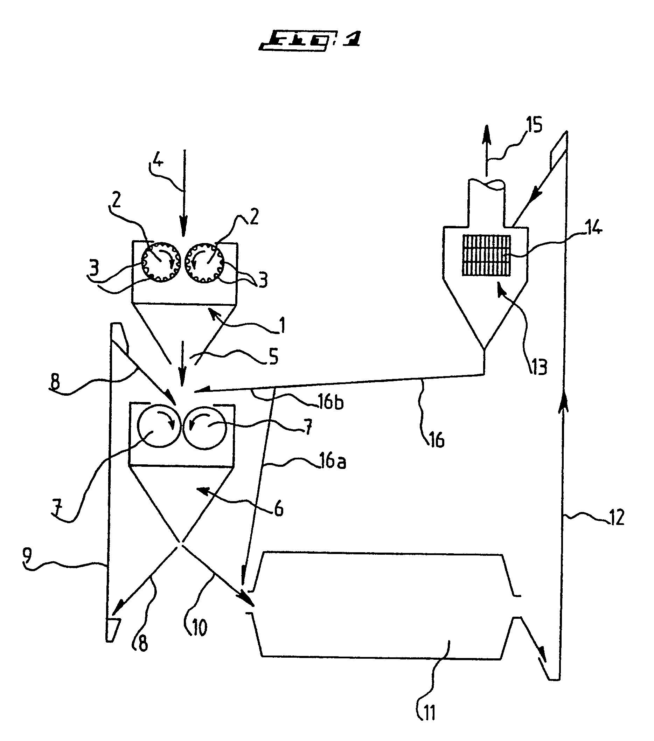

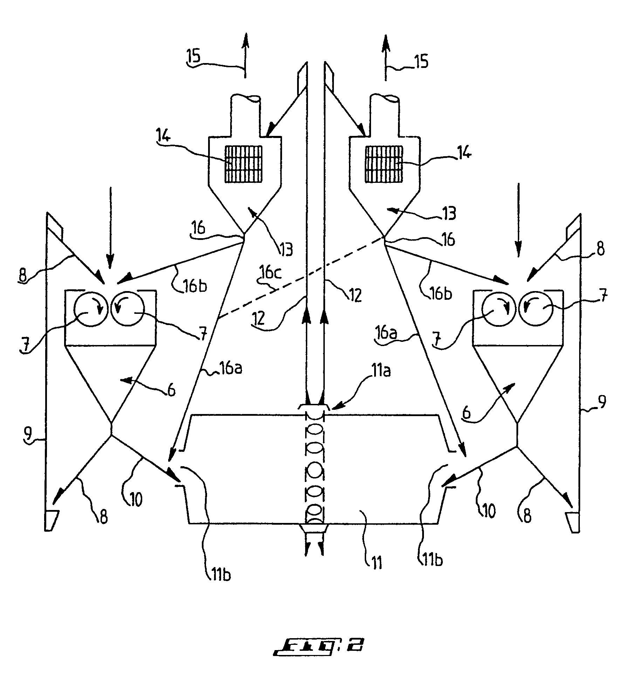

Mais d'autres caractéristiques et avantages de l'invention apparaîtront mieux dans la description détaillée qui suit, et se réfère aux figures 1 et 2 annexées montrant schématiquement et respectivement deux réalisations d'installations conformes aux principes de cette invention.

En se reportant à la figure 1, on voit qu'une installation selon l'invention comprend un broyeur 1 à compression lente, muni d'au moins une paire de rouleaux 2, ledit broyeur étant alimenté en une matière minérale quelconque et telle que par exemple du clinker de ciment, comme matérialisé par la flèche 4.

Les rouleaux 2 comportent de préférence sur leur périphérie des alvéoles 3 qui régularisent avantageusement l'écoulement de la matière broyée par les rouleaux 2.

Le broyeur 1 débouche par une trémie ou analogue 5 dans un deuxième broyeur 6 muni lui aussi de rouleaux 7 à compression lente, c'est-à-dire permettant un écrasement lent de la matière sortant du broyeur 1.

Comme montré sur la figure 1 à titre d'exemple, la matière sortant du broyeur 6 est recyclée vers l'entrée de ce broyeur, comme cela est matérialisé par les flèches 8, étant entendu que ce recyclage peut être effectué à l'aide de tout moyen approprié, tel que par exemple un élévateur représenté schématiquement en 9.

On comprend donc qu'on réalise ainsi des cycles successifs d'écrasement lent de la matière dans le broyeur 6, et cela sans aucune extraction intermédiaire de matière.

De tels cycles successifs peuvent être réalisés, sans sortir du cadre de l'invention, autrement que par le recyclage précité, c'est-à-dire en prévoyant dans l'installation plusieurs broyeurs tels que 6 et agencés les uns au-dessus des autres par exemple.

La matière broyée sortant du broyeur 6 est acheminée par la ligne 10 dans un broyeur final 11 qui est de préférence un broyeur à boulets. Il est à noter que le rendement de ce broyeur final conduisant au produit fini sera nécessairement très élevé du fait que la matière minérale a déjà subi des cyles successifs d'écrasement lent et présente par conséquent une fragmentation idéale évitant tout bourrage dans le broyeur final 11.

Il est important de remarquer ici que les cycles d'écrasement lent effectués préalablement au broyage final peuvent être compris entre 2 et 10.

Le produit sortant du broyeur final 11 peut être recueilli pour utilisation ou bien, suivant l'exemple représenté, acheminé par tout moyen approprié, tel que par exemple un élévateur montré schématiquement en 12, dans un séparateur 13 qui peut être par exemple un séparateur dynamique du type pneumatique.

C'est ainsi que le séparateur 13 peut être alimenté avec un fluide gazeux sous pression et contenir une turbine 14, de sorte que les particules fines provenant de l'élévateur 12 passeront au travers de la turbine 14 et seront évacuées du séparateur 13, comme on le voit en 15, tandis que les particules grossières, qui ne pourront pas pénétrer dans la cage 14, pourront s'écouler dans une conduite 16.

Cette conduite 16 se divise en une portion de conduite 16a aboutissant à l'entrée du broyeur final 11, et en une portion de conduite 16b aboutissant à l'entrée du broyeur 6 à compression lente de façon à recycler ainsi les particules grossières provenant du séparateur 13.

Dans la réalisation visible sur la figure 2, le broyeur final 11 est un broyeur à sortie centrale 11a alimenté à ses deux extrémités 11b par deux broyeurs à compression lente indépendante 6. La sortie centrale 11a du broyeur final 11 est raccordée par deux élévateurs ou analogues tels que 12 à l'entrée de deux séparateurs indépendants 13 contenant chacun une turbine 14 comme expliqué précédemment. Chaque séparateur 13 comporte une conduite 16 qui se subdivise comme expliqué à propos de la figure 1, en une conduite 16b reliée à l'entrée du broyeur à compression lente 6, et en une conduite 16a reliée à l'extrémité ou entrée 11b du broyeur à boulets 11. Il est à noter que, sans sortir du cadre de l'invention, et comme montré en 16c sur la figure 2, la sortie de chaque séparateur 13 peut être raccordée aux deux entrées 11b du broyeur final 11.

Il n'est pas nécessaire d'expliquer le fonctionnement de l'installation qui se déduit de la description qui précède.

Cependant, on insistera ici sur les nombreux avantages présentés par cette invention et qui se situent essentiellement au niveau du pré-broyage effectué en amont du broyeur final 11.

Plus précisément, ces avantages résident dans l'utilisation des cycles d'écrasement lent de la matière réalisés soit par l'emploi de broyeurs séparés, soit par recyclage de la matière sur un broyeur que la matière traverse ainsi plusieurs fois.

Tout d'abord, le fait que la matière soit soumise à plusieurs cycles d'écrasement successifs conduit à un pourcentage de particules grossières non fragmentées qui est considérablement réduit par rapport à de la matière qui aurait subi un seul cycle d'écrasement, de sorte que le broyeur final 11 peut fonctionner dans des conditions optimales.

De plus, les pressions appliquées sur la matière peuvent être nettement réduites de sorte que l'usure des rouleaux du broyeur est minimale de même que la durée de vie des roulements des broyeurs est augmentée.

Enfin, le rendement énergétique de l'opération de pré-broyage est nettement supérieur à celui que l'on obtiendrait avec un seul cycle d'écrasement lent.

On a donc réalisé suivant l'invention un procédé et une installation de broyage qui sont particulièrement efficaces et économiques pour le traitement du clinker de ciment par exemple.

Bien entendu, l'invention n'est nullement limitée au mode de réalisation décrit et illustré qui n'a été donné qu'à titre d'exemple.

C'est ainsi que les rouleaux des broyeurs peuvent comporter ou non des alvéoles sur leur périphérie. De même, dans le cas où les cycles successifs d'écrasement sont réalisés avec des broyeurs successifs, le nombre de ces broyeurs peut être quelconque. Si ces cycles successifs sont réalisés au moyen d'un recyclage, ce recyclage peut être prévu au niveau d'un broyeur ou de plusieurs broyeurs.

## Revendications

1. Procédé de broyage de matières minérales quelconques, telles que par exemple du clinker de ciment et du type consistant d'une part à broyer la matière en au moins deux étapes, à savoir une première étape de broyage par écrasement lent de la matière et une deuxième étape de broyage procédant d'une manière différente, d'autre part à séparer le produit issu de la deuxième étape de broyage en une fraction de produit fini qui est extraite et une fraction de produit grossier qui est recyclée, au moins en partie, à l'alimentation de l'étape de broyage final, caractérisé en ce que entre la première étape de broyage et la deuxième étape de broyage, on effectue au moins une étape de broyage intermédiaire par écrasement lent de la matière sans extraction intermédiaire de produit fini entre la première et la deuxième étapes de broyage.

2. Procédé selon la revendication 1, caractérisé en ce que le nombre d'étapes de broyage intermédiaire par écrasement lent de la matière est compris entre 2 et 10.

3. Procédé selon la revendication 1 ou 2, caractérisé en ce que les étapes de broyage intermédiaire précitées résultent d'un recyclage de la matière.

4. Installation pour la mise en oeuvre du procédé selon l'une des revendications 1 à 3 et du type comprenant un premier broyeur (1) permettant le broyage de la matière minérale par compression lente, ce broyeur étant raccordé à un broyeur final (11) de type différent dont la sortie est raccordée à un séparateur de particules (13) qui est relié notamment à l'entrée du broyeur final, caractérisé en ce qu'il comprend au moins deux broyeurs (6) à compression lente et communicants, ou un broyeur (6) à compression lente muni d'un système (9) de recyclage de la matière depuis la sortie vers l'entrée de ce broyeur, ces deux broyeurs ou ce broyeur étant intercalés entre le premier broyeur (1) et le broyeur final (11).

5. Installation selon la revendication 4, caractérisée en ce que, dans le cas où elle comprend au moins deux broyeurs communicants (6), au moins l'un des broyeurs est muni d'un système de recyclage vers l'entrée de ce broyeur ou vers l'entrée de l'un quelconque des broyeurs précédents.

6. Installation selon la revendication 4 ou 5, caractérisée en ce que le broyeur final (11) est un broyeur à sortie centrale (11a) alimenté à chaque extrémité (11b) par un broyeur à compression lente (6) équipé d'un système (8, 9) de recyclage de la matière et dont la sortie est reliée à deux séparateurs de particules indépendants (13), chaque séparateur étant relié à l'un des broyeurs (6) à compression lente, et à l'une et/ou l'autre des extrémités ou entrées (11b) du broyeur final (11).

## Ansprüche

1. Verfahren zum Zerkleinern von irgendwelchen Mineralstoffen wie zum Beispiel Zementklinker und derjenigen Gattung, die darin besteht, einerseits den Stoff in wenigstens zwei Vorgängen zu zerkleinern und zwar einen ersten Vorgang zur Zerkleinerung durch langsames Zerdrücken des Stoffes und einen zweiten in einer anderen Weise verlaufenden Zerkleinerungsvorgang, andererseits, das aus dem zweiten Zerkleinerungsvorgang entstandene Erzeugnis in einen Fertigproduktbruchteil, der ausgeschieden wird und in einen Grobproduktbruchteil, der wenigstens zum Teil zu der Speisung des Endzerkleinerungsvorgangs im Kreislauf zurückgeführt wird, zu trennen, dadurch gekennzeichnet, dass zwischen dem ersten Zerkleinerungsvorgang und dem zweiten Zerkleinerungsvorgang man wenigstens einen Zwischenvorgang zur Zerkleinerung durch langsames Zerdrücken des Stoffes durchführt ohne Zwischenausscheidung des Fertigproduktes zwischen dem ersten und dem zweiten Zerkleinerungsvorgang.

2. Verfahren nach Anspruch 1, dadurch gekennzeichnet, dass die Anzahl der Vorgänge zur Zwischenzerkleinerung durch langsames Zerdrücken des Stoffes zwischen 2 und 10 liegt.

3. Verfahren nach Anspruch 1 oder 2, dadurch gekennzeichnet, dass die vorgenannten Zwischenzerkleinerungsvorgänge aus einer Rückführung des Stoffes im Kreislauf entstehen.

4. Anlage zur Durchführung des Verfahrens nach einem der Ansprüche 1 bis 3 und der Gattung mit einem ersten, die Zerkleinerung des Mineralstoffes durch langsames Zerdrücken ermöglichenden ersten Zerkleinerer (1), wobei dieser Zerkleinerer an einen Endzerkleinerer (11) unterschiedlicher Gattung angeschlossen ist, dessen Ausgang an einen Teilchentrenner (13), der insbesondere mit dem Eingang des Endzerkleinerers verbunden ist, angeschlossen ist, dadurch gekennzeichnet, dass sie wenigstens zwei in Verbindung stehende, durch langsames Zerdrücken wirkende Zerkleinerer (6) oder einen, durch langsames Zerdrücken wirkenden Zerkleinerer (6) mit einem System (9) zur Zurückführung des Stoffes im Kreislauf von dem Ausgang zum Eingang dieses Zerkleinerers umfasst, wobei diese beiden Zerkleinerer oder dieser Zerkleinerer zwischen dem ersten Zerkleinerer (1) und dem Endzerkleinerer (11) eingeschaltet sind bzw. ist.

5. Anlage nach Anspruch 4, dadurch gekennzeichnet, dass in dem Falle wo sie wenigstens zwei in Verbindung stehende Zerkleinerer (6) aufweist, wenigstens einer der Zerkleinerer mit einem System zur Rückführung im Kreislauf zum Ausgang dieses Zerkleinerers oder zum Eingang irgendeines der vorangehenden Zerkleinerer hin versehen ist.

6. Anlage nach Anspruch 4 oder 5, dadurch gekennzeichnet, dass der Endzerkleinerer (11) ein Zerkleinerer mit Zentralaustritt (11a) ist, der an jedem Ende (11b) durch einen durch langsames Zerdrücken wirkenden Zerkleinerer (6) gespeist wird, der mit einem System (8, 9) zur Rückführung des Stoffes im Kreislauf ausgestattet ist und dessen Austritt mit zwei unabhängigen Teilchentrenner (13) verbunden ist, wobei jeder Trenner mit einem der durch langsames Zerdrücken wirkenden Zerkleinerer (6) und mit einem und/oder dem anderen der Enden bzw. Eintritte (11b) des Endzerkleinerers (11) verbunden ist.

## Claims

1. Method of pounding any mineral materials whatsoever such for example as cement clinker and of the type consisting on the one hand in pounding the material in at least two stages, namely a first stage of pounding through slow crushing of the material and a second stage of pounding proceeding in a different manner, on the other hand in separating the product issuing from the second pounding stage into a fraction of finished products which is extracted and a fraction of coarse product which is recycled at least in part to the feed of the final pounding stage, characterized in that between the first pounding stage and the second pounding stage one effects at least one intermediate pounding stage through a slow crushing of the material without intermediate extraction of the finished product between the first and the second pounding stages.

2. Method according to claim 1, characterized in that the number of intermediate pounding stages through slow crushing of the material is lying between 2 and 10.

3. Method according to claim 1 or 2, characterized in that the aforesaid intermediate pounding stages result from a recycling of the material.

4. Plant for carrying out the method according to one of claims 1 to 3 and of the type comprising a first crusher (1) allowing the pounding of the mineral material through a slow compression, this crusher being connected to a final crusher (11) of a different type the outlet of which is connected to a particle separator (13) which is connected in particular to the inlet of the final crusher, characterized in that it comprises at least two communicating crushers (6) for a slow compression or one crusher (6) for a slow compression provided with a system (9) for recycling the material from the outlet towards the inlet of this crusher, these two crushers or this crusher being interposed between the first crusher (1) and the final crusher (11).

5. Plant according to claim 4, characterized in that in the case where it comprises at least two communicating crushers (6), at least one of the crushers is provided with a system for recycling towards the inlet of this crusher or towards the inlet of any one of the preceding crushers.

6. Plant according to claim 4 or 5, characterized in that the final crusher (11) is a crusher with a central outlet (11a) fed at each end (11b) by a slow compression pressure (6) fitted with a system (8, 9) for recycling the material and the outlet of which is connected to two independent particle separators (13), each separator being connected to one of the slow-compression pressures (6) and to one and/or the other one of the ends or inlets (11b) of the final crusher (11).

FIG. 1

_Fig. 2_